# EUROPEAN PATENT SPECIFICATION

(11) **EP 0 846 409 B1**
(45) Date of publication and mention of the grant of the patent: **04.07.2001**
(21) Application number: 97203796.4
(22) Date of filing: 03.12.1997
(51) Int. Cl.: A01D 45/02

(54) **Modular stalkroll with a three bolt attachment means**
Modulare Pflückwalze mit drei Schraubbolzen-Verbindung
Rouleau cueilleur à trois boulons de connexion

(30) Priority: 06.12.1996 US 761272
(43) Date of publication of application: 10.06.1998
(73) Proprietor: NEW HOLLAND BELGIUM N.V., B-8210 Zedelgem (BE)
(72) Inventor: Bich, Gary L., New Holland, PA 17557 (US); Rayfield, James F., New Holland, PA 17557 (US); Hurlburt, Dale M., Landisville, PA 17538 (US)
(74) Representative: Vandenbroucke, Alberic

(56) References cited:
- US-A- 2 905 181
- US-A- 5 040 361
- US-A- 5 404 699

## Description

This invention relates to the improvement of machines used in the harvesting of corn. More particularly, it relates to a stalkroll on a corn header.

Mechanical harvesting of corn has taken place for decades. However, efforts continue to make corn harvest operations more efficient and effective. A corn harvester generally includes a corn header which removes the ears from the stalks. The ear of corn is then fed into a separator or thresher which separates the grains of corn from all other materials. A corn header actually consists of several corn header assemblies or row units, one for each row which is being harvested in a single pass over the field. Each row unit typically comprises a row divider covering a pair of stalkrolls, gathering chains, stripper plates and a gear drive system. As the corn header is moved forwardly, the corn plants in each row enter the forwardly extending channels. Generally, the corn header has a stripper plate with a slot which is wide enough to receive the corn stalk, but not wide enough for the stalk and an ear of corn to pass through. As the stripper plate moves forwardly, it exerts a forward and upward force on the ear.

Below the stripper plate in each corn header unit are a pair of stalkrolls, the axes of which are parallel to the stripper plate slot and are located on each side of the stripper plate slot. These rolls rotate in opposite directions to one another engaging the stalk below the stripper plate. The directions of rotation are such as to exert a downward and rearward force on the stalk relative to the stripper plate. The generally opposing forces exerted by the rolls and plate on the stalk and ear snap off the ear from the stalk. The ears and any trash are transported into the harvester or combine for further processing while the stalk generally remains rooted in the ground.

Stalkrolls generally have conical front ends (sometimes referred to as front augers) to provide a space for entry of the stalks, and cylindrical rear ends (sometimes referred to as fabricated stalkrolls) which engage the stalk. The front end may be provided with helical flutes wound in opposite directions to drive the stalk rearwardly toward to the stripper plate. Usually the fabricated stalkrolls have circumferentially spaced, axially extending and radially projecting flutes which engage the stalk. The flutes on each roll are arranged in a manner so that the flutes intermesh in the manner of gears.

In conventional farming, the soil is tilled after the crop is harvested in the fall in order to break up the roots and stalks left in the field, and once more before planting of the next crop to provide loose soil for receiving the seed. Low till techniques seek to minimize the number of tillings in order to save on fuel costs for machinery, extend the life of machines, enable larger acreage to be tilled and save on labour costs by allowing the same or smaller work force. Less tillage minimizes soil erosion and pollution of water in wells, aquifers and waterways. Less tillage reduces the runoff of plant nutrients, unused commercial fertilizers, and herbicide residues. Less tillage and no till techniques, in particular, are believed to improve moisture retention in the soil aiding future crops because the residue left on the ground with these techniques acts as a mulch. The composting effect of the residue after it has decomposed may in the long term reduce the need for commercial fertilizer. Low till and no till techniques are encouraged or required on some acreage by laws and regulations.

Depending on the tilling technique desired, it may be preferable to use a different stalkroll. For example, the flutes on a low till or no till acreage may be sharper than the flutes used on a stalkroll on conventional acreage. Sharper flutes or knives on a stalkroll will cut the stalk leaving this residue in a better condition to decompose. However, to convert the flutes on existing stalkrolls is a difficult and time-consuming task. Depending on the design, anywhere from 6 to 28 bolts per pair of stalkrolls must be removed. Furthermore stalkrolls may be clamped to a drive shaft by rust which will hold the stalkroll onto the shaft, requiring substantial force to remove the roll.

Many stalkrolls are a single cast design wherein the fabricated stalkroll and front auger are a single unit. However, the flutes on the fabricated stalkroll constitute the portion which wears down the quickest. Hence, a perfectly good front auger is disposed of while replacing a worn flute on a fabricated stalkroll.

The prior art illustrates these and other deficiencies. Originally, the stalkrolls required a bearing support between the front auger and fabricated stalkroll as illustrated in US-A-4,219,919. However, the bearings were prone to damage and failure if dirt entered the bearings. Furthermore, leaves and husks would tend to get caught and damage the bearing and bearing support elements. Bearing failure would ultimately result in the entire stalkroll failing. Another early stalkroll design is shown by US-A-3,982,385. In this design, knives were bolted directly to the drive shaft. This approach required a large number of bolts making replacement of the knives or flutes time consuming. Recently, the industry has started to use a cantilevered stalkroll and driving mechanism. The conventional stalkroll design in a cantilevered stalkroll system involves clamping two semi-circular halves horizontally around a centrally located drive shaft. US-A-5,404,699 and US-A-5,040,361 disclose such an approach.

Another difficulty with replacing any stalkroll is the occurrence of rust between the fabricated stalkroll and the drive shaft. Moisture frequently builds up between the stalkroll and drive shaft causing rust, further causing the stalkroll to adhere to the shaft. This adherence to the drive shaft makes removal of the stalkroll even more difficult. US-A-5,040,361 has attempted to overcome this problem by providing a threaded socket at the pinnacle of the front auger for the insertion of a removal device for forcing the shaft from the stalkroll.

A final difficulty with all stalkrolls involves the maintenance of proper timing between a pair of stalkrolls. If the fabricated stalkrolls become misaligned, the flutes on the opposing stalkroll will improperly cut the stalk. In certain designs, a misalignment will result in catastrophic damage to the stalkroll. US-A-3,982,385 and US-A-5,404,699 require perfect alignment in order to be effective in cutting stalks.

Consequently, the need exists for a stalkroll which is easy to remove from the drive shaft, which requires fewer attachment devices and for which the flutes can be easily replaced depending on the desired tillage conditions or wear of the flutes. It would be desirable for a stalkroll for which alignment between a pair of stalkrolls is simple.

It is an object of the present invention to provide a modular stalkroll which allows for the simplified replacement of the fabricated stalkroll.

According to the invention a row unit for a corn header suitable for use on a corn harvester is provided, said unit comprising at least one modular stalkroll comprising:
a drive shaft linked to a drive means;
a fabricated stalkroll mounted around said drive shaft; and
a front auger attached forward of said fabricated stalkroll and having a base,
characterized in that said modular stalkroll further comprises:
a drive shaft channel, affixed to said base of said front auger and receiving said drive shaft inside said fabricated stalkroll; and
bolt means for jointly clamping said fabricated stalkroll and said drive shaft channel to said drive shaft.

Advantageously the bolt means comprise only three bolts to affix a stalkroll to the drive shaft of the corn header. Such design provides an easy to substitute fabricated stalkroll on a drive shaft to obtain the desired tillage.

The fabricated stalkroll may be equipped with a pair of brackets which are affixed by the bolt means to the drive shaft and the drive shaft channel. This reduces the effect of rust adherence between the fabricated stalkroll and the drive shaft. The drive shaft may be cantilevered. Moreover, because there is a gap between the drive shaft channel and the fabricated stalkroll, the stalkroll assembly is easily removed even if rust adherence occurs.

The drive shaft channel may have three retaining bolt receptacles; the rear bracket may then receive the first and second retaining bolts and the front bracket the third retaining bolts. The first and second retaining bolts clamp the rear bracket around the drive shaft and onto the drive shaft channel. A third retaining bolt may be used to secure the front bracket to the drive shaft and drive channel. The retaining bolts may be tightened or loosened through apertures located on the surface of the fabricated stalkroll. The flutes on the stalkroll may be replaced by removing the three retaining bolts and replacing the fabricated stalkroll.

Proper orientation of the bore for the third bolt in the drive shaft enables easy alignment of a stalkroll relative an opposing stalkroll.

An embodiment of the present invention will now be described in greater detail, by way of example, with reference to the accompanying drawings, in which:
Figure 1 is a general view of a corn harvester combine with a corn header containing a stalkroll according to the present invention;
Figure 2 is an exploded view of the stalkroll and drive shaft of the present invention;
Figure 3 is a cutaway view of the stalkroll;
Figure 4 is an enlarged sectional view taken along line 4-4 of Fig 2 and showing the front bracket, drive shaft and third retaining bolt; and
Figure 5 is an enlarged sectional view taken along line 5-5 of Fig. 2 and showing the rear hub, the first and second retaining bolts and the drive shaft. The flutes on Figure 5 illustrate a second embodiment of sharper flutes or knives.

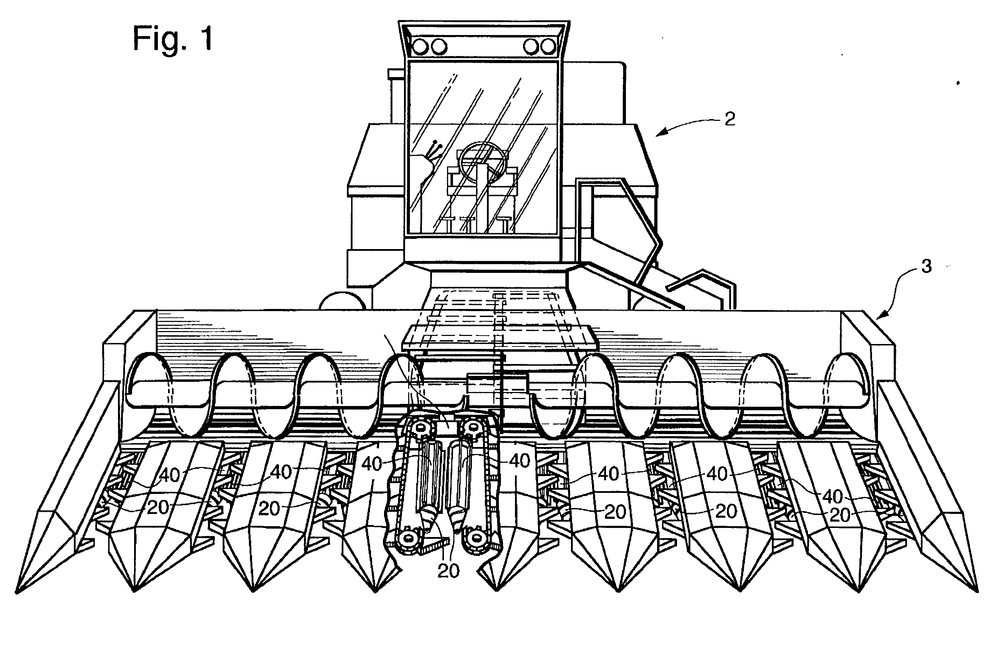

Referring to the drawings, it is possible to observe the major elements and general operation of the present invention. Figure 1 illustrates a conventional combine 2. Typically, there is a corn header 3 attached by the feeder house or elevator (shown by phantom lines) to the combine 2. The row dividers are introduced between rows of corn and the corn stalks are drawn by a front auger 20 and then engaged by the stalkroll 40. The gathering chains feed the ear of corn backwards to a transverse auger. This auger moves the corn to the feeder house. The ears of corn are moved through the feeder house into a threshing system located in the combine 2. The threshing system separates the corn kernels separated from the ears. The separated kernels are then conveyed into in a grain tank located at the top of the combine for storage therein. The kernels are discharged later. The trash and chaff are discharged at the rear of the combine 2. An operator drives the combine 2 from a glass cab with a chair and steering column. From the cab, the operator can observe most of the operation of the corn header 3 and the combine 2.

A modular stalkroll according to the present invention is located on the front of the corn header 2. The modular stalkroll comprises a drive shaft 70, the front auger 20 and a fabricated stalkroll 40. The front auger 20 has a drive shaft channel 30 which receives the drive shaft 70. The drive shaft 70, front auger 20 and stalkroll 40 are clamped together by three retaining bolts 61, 62 and 51 as will be described hereinafter. Typically stalkrolls operate in pairs and each stalkroll 40 counter-rotates in an inward and downward fashion relative to the stalkroll axes. A stalk is drawn rearwardly by the front auger 20 toward the fabricated stalkrolls 40 which subsequently force the stalk downward and cut the same.

The drive shaft 70 is driven by a conventional drive means. Reference is made to US-A-4,222,218 for a disclosure of a conventional cantilevered gear and drive system for a stalkroll. The drive shaft 70 has several modifications to differentiate it from a conventional drive shaft. Specifically, there is a drive shaft aperture 72 located at the front portion of the drive shaft farthest from the drive means. This aperture 72 is a bore designed to receive a retaining bolt which will be discussed later.

The front auger 20 is conical and has helical fluting for grasping and pulling the corn stalk rearward. At the base of the auger, there is a drive shaft channel 30 affixed thereto. The drive shaft channel 30 is curved and comprises a portion 34 which is able to cradle the drive shaft 70. The drive shaft channel 30 has three retaining bolt receptacles 31, 32, 33. The first retaining bolt receptacle 31 and the second retaining bolt receptacle 32 are located near the edge of the channel portion 34 farthest from the front auger 20. The third retaining bolt receptacle 33 is positioned in the channel 30 closest to the front auger 20.

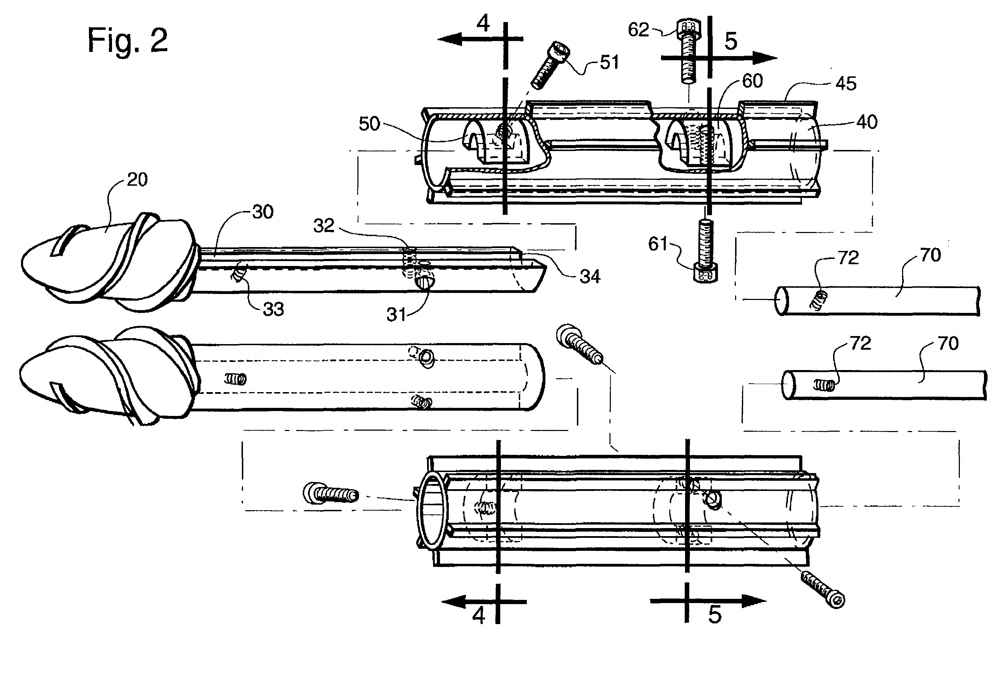

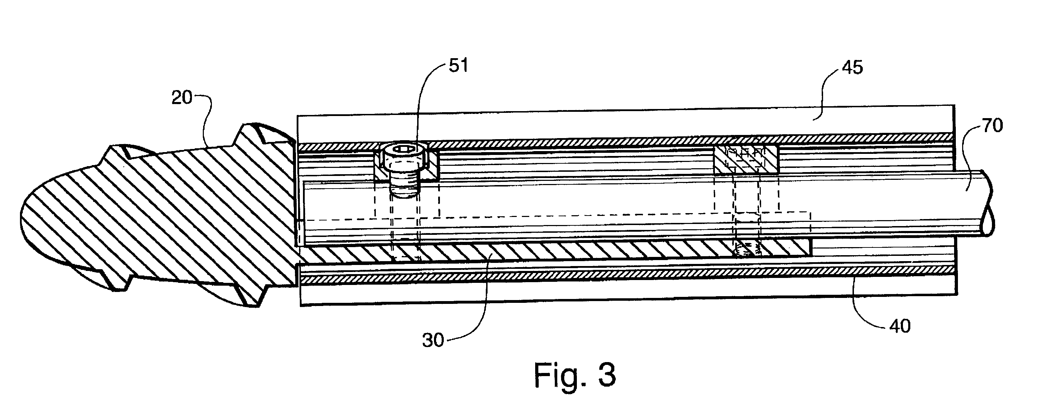

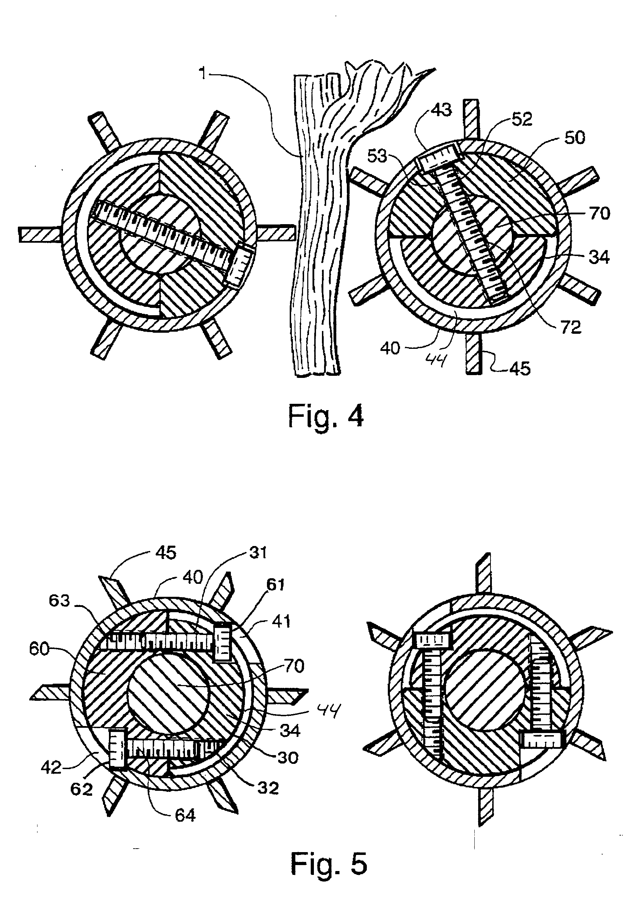

The cylindrical stalkroll 40 has several flutes 45 spaced radially around its exterior circumference. Depending on the quality of cut required, the flutes can be flat and blunt or sharp. The interior of the stalkroll 40 is hollow and contains a front bracket 50 and rear bracket 60. These brackets are affixed to the inner circumference of the fabricated stalkroll 40. The flutes 45 shown in Figures 1 through 4 are standard roll flutes (which are flat and blunt), however fluting with a sharper cutting edge may be used depending on the type of tillage desired. Figure 5 illustrates knives used in a low-till or no-till crop condition. If different fluting is desired, the fabricated stalkroll 40 is removed and another fabricated stalkroll with the desired knifes or flutes is installed. Likewise, when a flute becomes damaged or worn, the fabricated stalkroll can be replaced. A variety of flutes can be placed on the fabricated stalkroll. Because the fabricated stalkroll is easy to remove, alternative fluting designs can be experimented with.

The fabricated stalkroll 40 also has three apertures 41, 42, 43 for tightening or loosening the retaining bolts. The first and second surface apertures 41 and 42 are located near the centre of the fabricated stalkroll 40. The third surface aperture 43 is located near the front end of the fabricated stalkroll 40 closest the front auger 20.

As previously mentioned, the rear bracket 60 is affixed to the interior circumference of the fabricated stalkroll 40 near the centre of this stalkroll. The rear bracket 60 is semi-circularly shaped and is open at the centre. It has two apertures: first bracket aperture 63 and second bracket aperture 64 (Figure 5). The first retaining bolt 61 is inserted into the first surface aperture 41 of the stalkroll 40, through the first retaining bolt receptacle 31 in the channel portion 34 and then into the threaded first bracket aperture 63 in the rear bracket 60. The bolt 61 can be tightened through the surface aperture 41 to clamp the drive shaft channel 30 and fabricated stalkroll 40 together. The second retaining bolt 62 is inserted into the second surface aperture 42 of the stalkroll 40, through the second bracket aperture 64 in the rear bracket 60 and into the threaded second retaining bolt receptacle 32 in the channel portion 34. The bolt 62 can be tightened through the surface aperture 42 to clamp the drive shaft channel 30 and fabricated stalkroll 40 together.

The front bracket 50 is also affixed on the interior circumference of the fabricated stalkroll (Figure 4). The front bracket 50 is also semi-circularly shaped and is hollow at the centre. The front bracket 50 is located near the front end of the fabricated stalkroll 40, closest to the front auger 20. It has a third bracket aperture 52 aligned with the third surface aperture 43 and the drive shaft aperture 72. The third bracket aperture 52 is angled from the perpendicular plane of the channel 30. Typically, this angle ranges from 5 to 15 degrees. This angle allows the knives on the fabricated stalkroll to be properly aligned with the opposite stalkroll. The third retaining bolt 51 is inserted through the third surface aperture 43 and then into the third bracket aperture 52 in the front bracket 50. The third retaining bolt 51 then passes through the drive shaft aperture 72 and into the threaded third retaining bolt receptacle 33. The bolt 51 can be tightened through the surface aperture 43 to clamp the drive shaft 70, drive shaft channel 30 and fabricated stalkroll 40 together.

The second and third retaining bolts 61, 62 preferably are inserted from opposite sides of the fabricated stalkroll 40. When the bolts are tightened, the pressure on both sides of the rear bracket 60 will be equal on the drive shaft. The retaining bolts are conventional metal bolts which do not require sleeves.

Because there is a gap 44 between the drive shaft channel 30 and the fabricated stalkroll 40, removal of the fabricated stalkroll is not difficult. In the prior art, the drive shaft and fabricated stalkroll were tightly clamped together. In the present invention, the rear bracket 60 and front bracket 50 are the only parts in tight contact with the fabricated stalkroll 40. Once the retaining bolts 61, 62 and 51 are removed, the drive shaft channel 30 will drop off the drive shaft 30 with virtually no effort.

By appropriate different orientation of the drive shaft aperture 72 from one stalkroll relative to an opposing stalkroll, the fabricated stalkrolls 40 can only be installed in correct alignment. In the preferred embodiment, the drive shaft aperture 72 is 90 degrees different from a drive shaft aperture in an opposing stalkroll 72. Thus, the opposing stalkroll will be inserted at an orientation 90 degrees different. This insures the proper alignment of a pair of fabricated stalkrolls so as to avoid stalkroll timing problems.

It will be obvious to those skilled in the art that various changes may be made without departing from the scope of the invention and the invention is not to be considered limited to what is illustrated in the drawings and described in the specification.

## Claims

1. A row unit for a corn header suitable for use on a corn harvester, said unit comprising at least one modular stalkroll comprising:
a drive shaft (70) linked to a drive means;
a fabricated stalkroll (40) mounted around said drive shaft (70); and
a front auger (20) attached forward of said fabricated stalkroll (40) and having a base,
characterized in that said modular stalkroll further comprises:
a drive shaft channel (30), affixed to said base of said front auger (20) and receiving said drive shaft (70) inside said fabricated stalkroll (40); and
bolt means (51, 61, 62) for jointly clamping said fabricated stalkroll (40) and said drive shaft channel (30) to said drive shaft (70).

2. A row unit according to claim 1, characterized in that said bolt means comprise a first retaining bolt (61), a second retaining bolt (62) and a third retaining bolt (51) for affixing said fabricated stalkroll (40) to the drive shaft (70) and drive shaft channel (30).

3. A row crop unit according to claim 2, characterized in that the fabricated stalkroll (40) is affixed to the drive shaft (70) by the third retaining bolt (51), and said fabricated stalkroll (40) is affixed to drive shaft channel (30) by the first retaining bolt (61) and the second retaining bolt (62).

4. A row crop unit according to claim 3, characterized in that said bolt means only comprise a first retaining bolt (61), a second retaining bolt (62) and a third retaining bolt (51).

5. A row crop unit according to any of the preceding claims, characterized in that:
said fabricated stalkroll (40) has a front bracket (50) and a rear bracket (60); and
said bolt means (51, 61, 62) affix said front bracket (50) to the drive shaft (70) and drive shaft channel (30), and affix said rear bracket (60) to the drive shaft channel (30).

6. A row crop unit according to claim 5, characterized in that said rear bracket (60) is affixed to the drive shaft channel (30) by a first retaining bolt (61) and a second retaining bolt (62).

7. A row unit according to claim 6, characterized in that:
the rear bracket (60) has a first bracket aperture (63) and a second bracket aperture (64) therein; and
the drive shaft channel (30) has a first retaining bolt receptacle (31) and a second retaining bolt receptacle (32) therein, whereby
the first retaining bolt (61) enters the first retaining bolt receptacle (31) and then the first bracket aperture (63) where the retaining bolt (61) is secured and
the second retaining bolt (62) enters the second bracket aperture (64) and then the second retaining bolt receptacle (32) where the second retaining bolt (62) is secured, thereby clamping the rear bracket (60) to the drive shaft channel (30).

8. A row unit according to claim 7, characterized in that said fabricated stalkroll (40) has a first surface aperture (41) therein through which the first retaining bolt (61) is inserted into the first bracket aperture (63) and a second surface aperture (42) through which the second retaining bolt (62) is inserted into the second bracket aperture (64).

9. A row unit according to any of the claims 6 to 8, characterized in that the second retaining bolt (62) is inserted on an opposite side of the fabricated stalkroll (40) from the first retaining bolt (61), whereby the drive shaft (70) is evenly clamped.

10. A row crop unit according to any of the claims 5 to 9, characterized in that the front bracket (50) is affixed into the drive shaft (70) and drive shaft channel (30) by a third retaining bolt (51).

11. A row crop unit according to claim 10,
characterized in that:
said front bracket (50) has a third bracket aperture (52) therein;
said drive shaft (70) has a drive shaft aperture (72) therein; and
the drive shaft channel (30) has a third retaining bolt receptacle (33) therein, whereby the third retaining bolt (51) enters the third bracket aperture (52) then the drive shaft aperture (72) and then enters the third retaining bolt receptacle (33) where the third retaining bolt (51) is secured, thereby clamping the front bracket (50) to the drive shaft (70) and drive shaft channel (30).

12. A row unit according to claim 11, characterized in that said fabricated stalkroll (40) has a third surface aperture (43) therein through which the third retaining bolt (51) is inserted into the third bracket aperture (52).

13. A row unit according to claim 11 or 12, characterized in that said third bracket aperture (52) is at an angle in the range of 5 to 15 degrees to the perpendicular plane of the drive shaft channel (30).

14. A row unit according to any of the claims 11 to 13, characterized in that it further comprises a further modular stalkroll comprising a fabricated stalkroll (40) having a front bracket (50) with an aperture oriented such that both stalkrolls (40) are properly aligned.

15. A row unit according to any of the preceding claims, characterized in that said fabricated stalkroll (40) further comprises a plurality of flutes (45), selected from a group consisting of flat, blunt and knife fluting.

## Patentansprüche

1. Reiheneinheit für einen Mais-Erntevorsatz, der zur Verwendung auf einer Mais-Erntemaschine geeignet ist, wobei die Einheit zumindest eine modulare Pflückwalze aufweist, mit:
einer mit einer Antriebseinrichtung verbundenen Antriebswelle (70),
einer vorgefertigten Pflückwalze (40), die um die Antriebswelle (70) herum befestigt ist, und
einer vorderen Förderschnecke (20), die vor der vorgefertigten Pflückwalze (40) angebracht ist, und einen Basisteil aufweist,
dadurch gekennzeichnet, daß die modulare Pflückwalze weiterhin folgendes umfaßt:
einen Antriebswellenkanal (30), der an dem Basisteil der vorderen Förderschnecke (20) befestigt ist, und die Antriebswelle (70) im Inneren der vorgefertigten Pflückwalze (40) aufnimmt, und
Schraubenelemente (51, 61, 62) zum gemeinsamen Festklemmen der bearbeiteten Pflückwalze (40) und des Antriebswellenkanals (30) an der Antriebswelle (70).

2. Reiheneinheit nach Anspruch 1, dadurch gekennzeichnet, daß die Schraubenelemente eine erste Befestigungsschraube (61), eine zweite Befestigungsschraube (62) und eine dritte Befestigungsschraube (51) zur Befestigung der vorgefertigten Pflückwalze (40) an der Antriebswelle (70) und dem Antriebswellenkanal (30) umfassen.

3. Reihenfruchteinheit nach Anspruch 2, dadurch gekennzeichnet, daß die vorgefertigte Pflückwalze (40) an der Antriebswelle (70) durch die dritte Befestigungsschraube (51) befestigt ist, und daß die vorgefertigte Pflückwalze (40) an dem Antriebswellenkanal (30) über die erste Befestigungsschraube (61) und die zweite Befestigungsschraube (62) befestigt ist.

4. Reihenfruchteinheit nach Anspruch 3, dadurch gekennzeichnet, daß die Befestigungselemente lediglich eine erste Befestigungsschraube (61), eine zweite Befestigungsschraube (62) und eine dritte Befestigungsschraube (51) umfassen.

5. Reihenfruchteinheit nach einem der vorhergehenden Ansprüche, dadurch gekennzeichnet, daß:
die vorgefertigte Pflückwalze (40) einen vorderen Haltebügel (50) und einen hinteren Haltebügel (60) aufweist, und
die Befestigungselemente (51, 61, 62) den vorderen Haltebügel (50) an der Antriebswelle (70) und dem Antriebswellenkanal (30) befestigen, und den hinteren Haltebügel (60) an dem Antriebswellenkanal (30) befestigen.

6. Reihenfruchteinheit nach Anspruch 5, dadurch gekennzeichnet, daß der hintere Haltebügel (60) an dem Antriebswellenkanal (30) durch eine erste Befestigungsschraube (61) und eine zweite Befestigungsschraube (62) befestigt ist.

7. Reiheneinheit nach Anspruch 6, dadurch gekennzeichnet, daß:
der hintere Haltebügel (60) eine erste Haltebügel-Öffnung (63) und eine zweite Haltebügel-Öffnung (64) aufweist, die darin ausgebildet sind, und
der Antriebswellenkanal (30) einen erste Befestigungsschrauben-Aufnahmesitz (31) und einen zweiten Befestigungsschrauben-Aufnahmesitz (32) aufweist, die darin ausgebildet sind, wobei
die erste Befestigungsschraube (61) in den ersten Befestigungsschrauben-Aufnahmesitz (31) und dann in die erste Haltebügel-Öffnung (63) eintritt, in der die Befestigungsschraube (61) befestigt wird, und
die zweite Befestigungsschraube (62) in die zweite Haltebügel-Öffnung (64) und dann in den zweiten Befestigungsschrauben-Aufnahmesitz (32) eintritt, in dem die zweite Befestigungsschraube (62) befestigt wird, wodurch der hintere Haltebügel (60) an dem Antriebswellenkanal (30) festgeklemmt wird.

8. Reiheneinheit nach Anspruch 7, dadurch gekennzeichnet, daß die vorgefertigte Pflückwalze (40) eine darin ausgebildete erste Oberflächen-Öffnung (41), durch die hindurch die erste Befestigungsschraube (61) in die erste Haltebügel-Öffnung (63) eingesetzt wird, und eine zweite Oberflächen-Öffnung (42) aufweist, durch die hindurch die zweite Befestigungsschraube (62) in die zweite Haltebügel-Öffnung (64) eingesetzt wird.

9. Reiheneinheit nach einem der Ansprüche 6 bis 8, dadurch gekennzeichnet, daß die zweite Befestigungsschraube (62) von einer der ersten Befestigungsschraube (61) gegenüberliegenden Seite der vorgefertigten Pflückwalze (40) aus eingesetzt ist, wodurch die Antriebswelle (70) gleichförmig festgeklemmt ist.

10. Reihenfruchteinheit nach einem der Ansprüche 5 bis 9, dadurch gekennzeichnet, daß der vordere Haltebügel (50) an der Antriebswelle (70) und dem Antriebswellenkanal (30) durch eine dritte Befestigungsschraube (51) befestigt ist.

11. Reihenfruchteinheit nach Anspruch 10, dadurch gekennzeichnet, daß:
der vordere Haltebügel (50) eine darin ausgebildete dritte Haltebügel-Öffnung (52) aufweist,
die Antriebswelle (70) eine darin ausgebildete Antriebswellenöffnung (72) aufweist, und
der Antriebswellenkanal (30) einen darin ausgebildeten dritten Befestigungsschrauben-Aufnahmesitz (30) aufweist, wodurch die dritte Befestigungsschraube (51) in die dritte Haltebügel-Öffnung (52), dann in die Antriebswellen-Öffnung (72) und dann in den dritten Befestigungsschrauben-Aufnahmesitz (33) eintritt, in dem die dritte Befestigungsschraube (51) befestigt wird, wodurch der vordere Haltebügel (50) an der Antriebswelle (70) und dem Antriebswellenkanal (30) festgeklemmt wird.

12. Reiheneinheit nach Anspruch 11, dadurch gekennzeichnet, daß die vorgefertigte Pflückwalze (40) eine darin ausgebildete dritte Oberflächenöffnung (43) aufweist, durch die hindurch die dritte Befestigungsschraube (51) in die dritte HaltebügelÖffnung (52) eingesetzt wird.

13. Reiheneinheit nach Anspruch 11 oder 12, dadurch gekennzeichnet, daß die dritte Haltebügel-Öffnung (52) unter einem Winkel im Bereich von 5 bis 15° zur senkrechten Ebene des Antriebswellenkanals (30) steht.

14. Reiheneinheit nach einem der Ansprüche 11 bis 13, dadurch gekennzeichnet, daß sie weiterhin eine weitere modulare Pflückwalze aufweist, die durch eine vorgefertigte Pflückwalze (40) gebildet ist, die einen vorderen Haltebügel (50) mit einer Öffnung aufweist, die derart ausgerichtet ist, daß beide Pflückwalzen (40) richtig ausgerichtet sind.

15. Reiheneinheit nach einem der vorhergehenden Ansprüche, dadurch gekennzeichnet, daß die vorgefertigte Pflückwalze (40) eine Vielzahl von Riffelungen (45) aufweist, die aus einer Gruppe ausgewählt sind, die aus einer ebenen, stumpfen und einer messerförmigen Riffelung besteht.

## Revendications

1. Unité de rang pour un cueilleur de maïs pouvant être utilisée sur une moissonneuse de maïs, ladite unité possédant au moins un rouleau de tiges modulaire comprenant:
un arbre d'entraînement (70) relié à un moyen d'entraînement;
un rouleau de tiges (40) conformé monté autour dudit arbre d'entraînement; et
une vis frontale (20) fixée à l'avant dudit rouleau de tiges conformé (40) et possédant une base,
caractérisée en ce que ledit rouleau de tiges modulaire comprend:
un canal d'arbre d'entraînement (30), fixé à ladite base de ladite vis frontale (20) et recevant ledit arbre d'entraînement (70) à l'intérieur dudit rouleau de tiges conformé (40); et
des moyens de boulons (51, 61, 62) pour serrer jointivement ledit rouleau de tiges conformé (40)et ledit canal d'arbre d'entraînement (30) sur ledit arbre d'entraînement (70).

2. Unité de rang selon la revendication 1, caractérisée en ce que lesdits moyens de boulons comprennent un premier boulon de retenue (61), un second boulon de retenue (62) et un troisième boulon de retenue (51) destinés à fixer ledit rouleau de tiges conformé (40) à l'arbre d'entraînement (70) et au canal d'arbre d'entraînement (30).

3. Unité de rang selon la revendication 2, caractérisée en ce que le rouleau de tiges conformé (40) est fixé à l'arbre d'entraînement (70) par le troisième boulon de retenue (51), et ledit rouleau de tiges conformé (40) est fixé au canal d'arbre d'entraînement (30) par le premier boulon de retenue (61) et le second boulon de retenue (62).

4. Unité de rang selon la revendication 3, caractérisée en ce que lesdits moyens de boulons comprennent uniquement un premier boulon de retenue (61), un second boulon de retenue (62) et un troisième boulon de retenue (51).

5. Unité de rang selon l'une quelconque des revendications précédentes, caractérisée en ce que:
ledit rouleau de tiges conformé (40) possède un support avant (50) et un support arrière (60); et
les moyens de boulons (51, 61, 62) fixent ledit support avant (50) à l'arbre d'entraînement (70) et au canal d'arbre d'entraînement (30), et fixent ledit support arrière (60) au canal d'arbre d'entraînement (30).

6. Unité de rang selon la revendication 5, caractérisée en ce que ledit support arrière (60) est fixé au canal d'arbre d'entraînement (30) par un premier boulon de retenue (61) et un second boulon de retenue (62).

7. Unité de rang selon la revendication 6,
caractérisée en ce que:
le support arrière (60) possède en son sein une première ouverture de support (63) et une seconde ouverture de support (64); et
le canal d'arbre d'entraînement (30) possède en son sein un premier logement de boulon de retenue (31) et un second logement de boulon de retenue (32), de telle sorte que
le premier boulon de retenue (61) pénètre dans le premier logement de boulon de retenue (31) et ensuite dans la première ouverture de support (63) où le boulon de retenue (61) est bloqué et
le second boulon de retenue (62) pénètre dans la seconde ouverture de support (64) et ensuite dans le second logement de boulon de retenue (32) où le second boulon de retenue (62) est bloqué, serrant ainsi le support arrière (60) sur le canal d'arbre d'entraînement (30).

8. Unité de rang selon la revendication 7, caractérisée en ce que ledit rouleau de tiges conformé (40) possède en son sein une première ouverture superficielle (41) à travers laquelle le premier boulon de retenue (61) est inséré dans la première ouverture de support (63), et une seconde ouverture superficielle (42) à travers laquelle le second boulon de retenue (62) est inséré dans la seconde ouverture de support (64).

9. Unité de rang selon l'une quelconque des revendications 6 à 8, caractérisée en ce que le second boulon de retenue (62) est inséré dans une face opposée du rouleau de tiges conformé (40) par rapport au premier boulon de retenue (61), de telle sorte que l'arbre d'entraînement (70) soit également serré.

10. Unité de rang selon l'une quelconque des revendications 5 à 9, caractérisée en ce que le support avant (50) est fixé dans l'arbre d'entraînement (70) et le canal d'arbre d'entraînement (30) par un troisième boulon de retenue (51).

11. Unité de rang selon la revendication 10,
caractérisée en ce que:
ledit support avant (50) possède en son sein une troisième ouverture de support (52);
ledit arbre d'entraînement (70) possède en son sein une ouverture d'arbre d'entraînement (72); et
le canal d'arbre d'entraînement (30) possède en son sein un troisième logement de boulon de retenue (33), de telle sorte que le troisième boulon de retenue (51) pénètre dans la troisième ouverture de support (52) ensuite dans l'ouverture d'arbre d'entraînement (72) et enfin dans le troisième logement de boulon de retenue (33) où le troisième boulon de retenue (51) est bloqué, serrant ainsi le support avant (50) sur l'arbre d'entraînement (70) et le canal d'arbre d'entraînement (30).

12. Unité de rang selon la revendication 11, caractérisée en ce que ledit rouleau de tiges conformé (40) possède en son sein une troisième ouverture superficielle (43) au travers de laquelle le troisième boulon de retenue (51) est inséré dans la troisième ouverture de support (52).

13. Unité de rang selon la revendication 11 ou 12, caractérisée en ce que ladite troisième ouverture de support (52) est inclinée d'un angle compris entre 5 et 15 degrés par rapport au plan perpendiculaire du canal d'arbre d'entraînement (30).

14. Unité de rang selon l'une quelconque des revendications 11 à 13, caractérisée en ce qu'elle comprend en outre un rouleau de tiges supplémentaire comprenant un rouleau de tiges conformé (40) possédant un support avant (50) doté d'une ouverture orientée de telle sorte que les deux rouleaux de tiges (40) sont alignés correctement.

15. Unité de rang selon l'une quelconque des revendications précédentes, caractérisée en ce que ledit rouleau de tiges conformé (40) comprend en outre une pluralité de cannelures (45), sélectionnées parmi un groupe comprenant des cannelures planes, émoussées et des couteaux.
